# EUROPEAN PATENT SPECIFICATION

(11) **EP 0 505 164 B1**
(45) Date of publication and mention of the grant of the patent: **06.11.1996**
(21) Application number: 92302330.3
(22) Date of filing: 18.03.1992
(51) Int. Cl.: A23C 9/123

(54) **Fermented milk and a process for the manufacture thereof**
Sauermilch und Verfahren zu deren Herstellung
Lait fermenté et procédé pour sa préparation

(30) Priority: 18.03.1991 JP 78462/91
(43) Date of publication of application: 23.09.1992
(73) Proprietor: SNOW BRAND MILK PRODUCTS CO., LTD., Sapporo-shi, Hokkaido 065 (JP)
(72) Inventor: Yamauchi, Yoshihiko, Elizabeito Shinsapporo 305, Sapporo-shi, Hokkaido, (JP); Ishii, Satoshi, Kita 8-joh Heights 5, Sapporo-shi, Hokkaido (JP); Toyoda, Shuji, 1-3, Hirobacho 1-chome, Hokkaido (JP); Ahiko, Kenkichi, Sapporo-shi, Hokkaido (JP)
(74) Representative: Davies, Jonathan Mark

(56) References cited:
- INDIAN JOURNAL OF DAIRY SCIENCE, vol. 28, no. 1, 1975, pages 71-72; M.S. KALRA et al.: "Stoppage in increase in acid production of yogurt by incorporating a nisin-producing culture"
- FOOD SCIENCE & TECHNOLOGY ABSTRACTS, no. 76-09-P1739 (76052152); M.S. KALRA et al.: "Effect of nisin-producing strains on the activity of some common starter cultures", & INDIAN JOURNAL OF DAIRY SCIENCE, VOL. 28, NO. 4, P 302-303(1975)
- JOURNAL OF DAIRY SCIENCE, vol. 34, 1951, pages 1136-1148; L.E. BARIBO et al.: "The production of a growth inhibitor by lactic streptococci"
- JOURNAL OF DAIRY SCIENCE, vol. 60, no. 5, 1977, pages 815-821; F.J. BABEL: "Antibiosis by lactic culture bacteria"

## Description

The present invention relates to fermented milk exhibiting a controlled increase in acidity during storage and transportation containing lactobacilli and lactococci at a specific ratio, and to a process for manufacturing such fermented milk.

Antibacterial substances produced by lactic acid bacteria, typified by nisin produced by *Lactococcus lactis* subsp. *lactis*, formerly called *Streptococcus lactis* subsp. *lactis*, are used for the purposes of promoting the storage performance of foods and preventing the quality of foods from deteriorating due to proliferation of bacteria in the foods and contamination thereby.

It is very difficult to retain through the entire period of storage and transportation favourable flavour possessed by fermented foods immediately after production, e.g., fresh flavour of fermented milk in which living bacteria are present. Yoghurt, for example, which is characterised by the living bacteria therein, possesses an inherent defect in its flavour change due to the increase in acidity during storage and transportation. A number of trials have been undertaken for preventing the increase in acidity of yoghurt during storage. All of them, however, have yielded insufficient results; some having very limited effectiveness in preventing the acidity increase, others required very complicated manufacturing processes, and many of them involved high production costs.

As mentioned above, living bacteria contained in fermented food products, such as yoghurt, proliferate during storage and increase the acidity of the products, leading to a deterioration in flavour.

Development of a process for preventing such deterioration in flavour in fermented food products by suppressing activities of bacteria, which is a cause of such flavour deterioration, by a simple method without altering conventional process steps has been desired.

Amongst bacteria used for fermentation of raw milk at the start of yoghurt production are Lactobacillus *delbrueckii* subsp. *bulgaricus* and *Streptococcus salivarius* subsp. *thermophilus*, the former being the cause of the acidity increase at least in the storage and transportation period. Controlling the growth of *Lactobacillus delbrueckii* subsp. *bulgaricus* to directly inhibit the increase in acidity of the product during storage, therefore, leads to efficient prevention of product quality deterioration.

Indian Journal of Dairy Science, Vol. 28, No. 1, 71-72, (1975) relates to a process for the preparation of yoghurt by incubating a nisin producing bacteria culture in the yoghurt to inhibit acid production by lactobacillus. The nisin producing bacteria is *Streptococcus lactis-4*.

The present inventors have undertaken extensive studies on the mutual actions between bacteria used at the start of fermentation (such bacteria are hereinafter called "starter bacteria" or simply "starter") in manufacturing processes of fermented foods, and found that the growth of starter bacteria in the raw milk is suppressed by certain bacteria of *Lactococcus lactis* subsp. *lactis*. The inventors have further studied the cause of such inhibition and found that an antibacterial agent nisin secreted by *Lactococcus lactis* subsp. *lactis* ATCC 11454 in a medium suppresses the growth of other starter bacteria and controls formation of acids. These findings have led to the the present invention.

Accordingly, an object of this invention is to provide fermented milk with a controlled acidity increase during storage and transportation comprising living lactic acid bacteria consisting of a Lactobacillus sp. and a Streptococcus thermophilu sp. and nisin produced by *Lactococcus lactis* subsp. *lactis* ATCC 11454.

Another object of the present invention is to provide a process for the manufacture of fermented milk with a controlled acidity increase during storage and transportation comprising the addition to raw milk of a nisin-producing lactic acid bacteria belonging to genus *Lactococcus lactis* subsp. *lactis* ATCC 11454 together with a Lactobacillus sp. and with a Streptococcus thermophilus sp. and fermenting the raw milk.

In a preferred embodiment of the present invention, the lactic acid bacteria comprises *Lactobacillus delbrueckii* subsp. *bulgaricus* SBT 1511 (FERM BP- 3762) as Lactobacillus sp., or *Streptococcus salivarius* subsp. *thermophilis* as Streptococcus thermophilus sp., or both.

Further objects, features and advantages of the present invention are described below.

Nisin is a poly-peptide antibacterial compound produced by certain bacteria belonging to genus *Lactococcus lactis* subsp. *lactis*, e.g., ATCC11454 strain. Its primary structure is as follows (J. Amer. Chem. Soc., 93, 4634-4635 (1971).

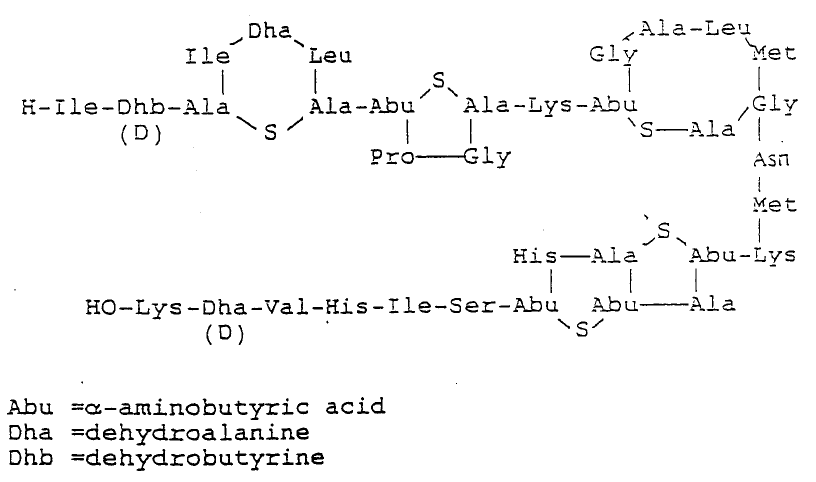

ATCC11454 is listed in the catalogue issued by American Type Culture Collection and can be obtained from the institute.

This antibacterial substance has a narrow spectrum and, as described later in more detail, only suppresses the growth of Lactobacilli which are the cause of product quality deterioration and does not suppress the growth of Lactococci.

Nisin is produced by the cultivation of nisin-producing bacteria such as *Lactococcus lactis* subsp. *lactis* ATCC11454, collected from the culture broth, and purified. Since it is produced by lactic acid bacteria which are used in food fermentation, nisin is a highly safe compound. In the United States, it is added to cheese for the purpose of preventing abnormal fermentation or rot of cheese. Also, for the production of cheese free from abnormal fermentation, nisin-producing bacteria is used as a starter microorganism.

According to the present invention, the acidity increase in fermented milk products can be controlled by manufacturing such products using, as starter bacteria, nisin-producing lactic acid bacteria belonging to genus *Lactococcus lactis* subsp. *lactis* ATCC 11454. This microorganism can be mutated by conventional mutation treatments, e.g., by irradiation of UV rays or by a treatment with chemicals, e.g., N-methyl-N′-nitro-N-nitrosoguanidine (NTG), etc. The present invention also includes such mutants.

Examples of lactic acid bacteria used in the present invention include *Lactobacillus delbrueckii* subsp. *bulgaricus, Lactobacillus helveticus* subst. *jugurti*, *Bifidobacterium breve* subst. *breve, Streptococcus salivarius* subsp. *thermophilus*, and the like. Among these, *Lactobacillus delbrueckii* subsp. *bulgaricus* SBT 1511 (FERM BP- 3762) is particularly preferable as Lactobacillus sp. due to its low acid-characteristic and the high sensitivity toward nisin. The mutants of this bacteria may also be used in the process of the present invention.

For carrying out the process of the present invention, these lactic acid bacteria are added to pasteurized milk,such as pasteurized skim milk,and cultivated. Cultured material is used as a starter for the fermentation of milk. The starter may contain both the cultivated nisin-producing bacteria and the lactic acid bacteria for the fermentation, or nisin-producing bacteria and the lactic acid bacteria may be individually cultivated to provide starters. Alternatively, all these bacteria may be directly added to a fermentation raw material. The amount of starter bacteria used for the production of fermented milk according to the present invention is 0.1-5% of the raw milk for nisin-producing bacteria and 1-3% for the lactic acid bacteria. Fermentation can be carried out under the same conditions as those applied to conventional milk fermentation processes.

According to the present invention, the growth of lactic acid bacteria for use in the fermentation of milk can be suppressed by nisin produced by these nisin-producing bacteria, thus preventing the quality of fermented products containing these fermentation lactic acid bacteria from deteriorating during storage and transportation. In particular, of the most commonly used starter bacteria, *Lactobacillus delbrueckii* subsp. *bulgaricus* and *Streptococcus salivarius* subsp. *thermophilus*, the former is the cause of product quality deterioration during storage and transportation, the growth of which can be suppressed by nisin. Thus, nisin promotes the quality of the fermented milk by retaining the amounts of these two bacteria in a suitable ratio.

Fermented milks of the present invention include hard yoghurt, soft yoghurt, acidophilus milk, fermented soft drinks, fermented butter milk, and the like.

Other features of the invention will become apparent in the course of the following description of the preferred embodiments which are given for illustration of the invention and are not intended to be limiting thereof.

### EXAMPLES

### Example 1

To 2 kg of a yoghurt mix consisting of raw milk, powdered skim milk, and sugar were added 1% of commercially available *Streptococcus salivarius* subsp. *thermophilus* and 1% of low acid-producing *Lactobacillus delbrueckii* subsp. *bulgaricus* SBT 1511 (FERM BP- 3762 ), followed by fermentation at 42°C for the production of a control sample of fermented milk. Other samples were prepared by adding, in addition to the above two bacteria, 0.1-1.0% of *Lactococcus lactis* subsp. *lactis* ATCC11454, followed by fermentation at 42°C. Acidity of each sample was measured over time and the fermentation terminated when the acidity reached 0.65%. Fermented milks thus obtained were stored at 10°C and their acidity measured after 14 days. The results are shown in Table 1, which demonstrates that the addition of ATCC11454 remarkably reduced the increase in acidity, e.g., to 76% of that of the control by the addition of 0.3% of ATCC11454 and to 49% of that of the control by the addition of 1.0% of ATCC11454. This test also indicated that, in the comparison of Sample No. 4 to which ATCC11454 was added together with other lactic acid bacteria at the start of fermentation and Sample No. 5 to which ATCC11454 was added 2.5 hours after the start of the fermentation, the former sample tank a longer time to reach an acidity of 0.65% and its acidity increase was more effectively controlled during the storage.

**TABLE 1**

| Sample No. | ATCC11454 (%) | Fermentation time (hour) | Acidity (%) | | Acidity increase in 14 days (%) (8-A) |
|---|---|---|---|---|---|
| | | | At completion of fermentation (A) | After 14 day storage (8) | |
| 1 | - | 3:15 | 0.642 | 1.030 | 0.388 (100%) |
| 2 | 0.1 | 3:30 | 0.647 | 1.018 | 0.371 (96%) |
| 3 | 0.3 | 3:35 | 0.651 | 0.947 | 0.296 (76%) |
| 4 | 1.0 | 6:20 | 0.637 | 0.826 | 0.189 (49%) |
| 5 | 1.0 * | 5:15 | 0.647 | 0.897 | 0.250 (64%) |

| | | | | | |
|---|---|---|---|---|---|
| * ATCC11454 was added 2.5 hours after the start of fermentation. | | | | | |

With the addition of 0.3-1.0% of ATCC11454 the number of living bacteria *Lactobacillus delbrueckii* subsp. *bulgaricus*, was controlled to 40-53% of that of the control sample, while the growth of *Streptococcus salivarius* subsp. *thermophilus* was hardly affected.

**TABLE 2**

| Lot No. | ATCC11454 (%) | | cfu/ml | |
|---|---|---|---|---|
| 1 | - | Streptococcus | 4.7x10⁸ | 76% |
| | | Lactobacillus | 1.5x10⁸ | 24% |
| 2 | 0.1 | Streptococcus | 5.1x10⁸ | 79% |
| | | Lactobacillus | 1.4x10⁸ | 21% |
| 3 | 0.3 | Streptococcus | 6.4x10⁸ | 89% |
| | | Lactobacillus | 0.8x10⁸ | 11% |
| 4 | 1.0 | Streptococcus | 5.3x10⁸ | 90% |
| | | Lactobacillus | 0.6x10⁸ | 10% |
| 5 | 1.0 * | Streptococcus | 5.0x10⁸ | 85% |
| | | Lactobacillus | 0.9x10⁸ | 15% |

| | | | | |
|---|---|---|---|---|
| * ATCC11454 was added 2.5 hours after the start of fermentation. | | | | |

### Example 2

To 2 kg of a yoghurt mix consisting of raw milk, powdered skim milk, and sugar were added 1.5% of commercially available *Streptococcus salivarius* subsp. *thermophilus* and 1.5% of low acid-producing *Lactobacillus delbrueckii* subsp. *bulgaricus* SBT 1511 (FERM BP- 3762), followed by fermentation at 42°C with stirring. 3-4 hours after the start of the fermentation, 0-5% of *Lactococcus lactis* subsp. *lactis* ATCC11454 was added, and the fermentation was continued at 42°C for 4 hours in total. Fermented milks were then stored at 10°C and their acidity measured after 14 days. The antibacterial activity of ATCC11454 was measured by the 96-well microplate method. Table 3 shows the number of living bacteria (colony forming unit: cfu) in yoghurt when the 4 hour fermentation was completed and changes in acidity during the storage at 10°C. As the table indicates, in the sample to which 5% of ATCC11454 was added, growth of bacteria when ATCC11454 was added 3.0 hours after the start of fermentation was controlled to 43% of that of the control sample (3.0x10⁸/7.0x10⁸) and growth when ATCC11454 was added 3.5 hours after the start of fermentation was controlled to 61% of that of the control sample (4.9x10⁸/8.0x10⁸).

The acidity increases in these samples were 62% and 81% respectively of that of the control sample, to which no ATCC11454 was added. In the sample to which ATCC11454 was added immediately after the 4 hour fermentation, the growth of bacteria was controlled to 80% (6.7x10⁸/8.4x10⁸) of that of the control sample and the acidity increase was 83% of that of the control sample. The antibacterial activity of ATCC11454 bacteria on *Lactobacillus delbrueckii* subsp. *bulgaricus* SBT 1511 was 12.5 U/ml converted to nisin.

**TABLE 3**

| ATCC11454 Addition Time: hour * | Added ATCC11454 (%) | Number of bacteria Upon completion of fermentation (cfu/ml) | Acidity increase | |
|---|---|---|---|---|
| | | | After 7 days | After 14 days |
| 3.0 | 0 | 7.0x10⁸ | 0.276 (100%) | 0.331 (100%) |
| | 1 | 5.7x10⁸ | 0.235 (85%) | 0.282 (85%) |
| | 2 | 4.9x10⁸ | 0.230 (83%) | 0.278 (84%) |
| | 5 | 3.0x10⁸ | 0.142 (51%) | 0.206 (62%) |
| 3.5 | 0 | 8.0x10⁸ | 0.287 (100%) | 0.315 (100%) |
| | 1 | 7.0x10⁸ | 0.276 (96%) | 0.323 (103%) |
| | 2 | 7.4x10⁸ | 0.245 (85%) | 0.270 (86%) |
| | 5 | 4.9x10⁸ | 0.203 (71%) | 0.256 (81%) |
| 4.0 | 0 | 8.4x10⁸ | 0.282 (100%) | 0.324 (100%) |
| | 1 | 8.6x10⁸ | 0.285 (101%) | 0.326 (101%) |
| | 2 | 6.7x10⁸ | 0.263 (93%) | 0.314 (97%) |
| | 5 | 6.7x10⁸ | 0.235 (83%) | 0.269 (83%) |

| | | | | |
|---|---|---|---|---|
| * Period of time (hours) from commencement of fermentation to when nisin-producing ATCC11454 was added. | | | | |

### Example 3

ATCC11454 bacteria were added into Elliker medium with the composition shown in Table 4, in an amount constituting 1% of the medium, and fermented at 30°C for 20 hours. Cells were separated by centrifugation at 5,000 rpm for 15 minutes, washed with physiological saline, and dispersed into an equivalent amount of 12% reduced skim milk. Yoghurt mixes were prepared by adding 1% of commercially available *Streptococcus salivarius* subsp. *thermophilus* and 1.5% of low acid-producing *Lactobacillus delbrueckii* subsp. *bulgaricus* SBT 1511 (FERM BP- 3762), and the further addition of ATCC11454 bacteria in amounts of 0-5% as listed in Table 5. The mixes were fermented by allowing them to stand at 42°C for 4 hours and stored at 0°C. After 14 days, the acidity of the yoghurt mixes was measured. The antibacterial activity of ATCC11454 upon completion of fermentation was measured by the 96-well microplate method. The results are shown in Table 5.

**Table 4**

| | |
|---|---|
| Bacto Tryptone | 20 g/l |
| Bacto Yeast Extract | 5 |
| Bacto Gelatin | 2.5 |
| Bacto Dextrose | 5 |
| Bacto Lactose | 5 |
| Bacto Saccharose | 5 |
| Sodium Chloride | 4 |
| Sodium Acetate | 1.5 |
| Ascorbic Acid | 0.5 |

**TABLE 5**

| ATCC11454 (%) *1 | Number of living *2 bacteria (cfu/ml) | | Acidity (%) | | Acidity increase (%) | Antibacterial Activity (U/ml) *3 |
|---|---|---|---|---|---|---|
| | *Streptococcus* | *Lactobacillus* | Upon fermentation | After 14 days | | |
| 0 | 6.7x10⁸ | 3.1x10⁸ | 0.888 | 1.328 | 0.443 (100%) | 0 |
| 0.5 | 6.3x10⁸ | 2.3x10⁸ | 0.850 | 1.255 | 0.404 (91%) | 0 |
| 1 | 6.5x10⁸ | 2.2x10⁸ | 0.838 | 1.239 | 0.401 (91%) | 0 |
| 2 | 6.5x10⁸ | 1.4x10⁸ | 0.800 | 1.129 | 0.329 (74%) | 2 |
| 5 | 6.5x10⁸ | 0.4x10⁸ | 0.600 | 0.893 | 0.291 (66%) | 2 |

| | | | | | | |
|---|---|---|---|---|---|---|
| *1 The amount of nisin-producing bacterium, ATCC11454. | | | | | | |
| *2 The number of bacteria upon completion of fermentation; 4 hours after the start of fermentation. | | | | | | |
| *3 Antibacterial activity against *Bacillus* Stearothermophilus. | | | | | | |

As shown in table 5, in the sample to which 5% of ATCC11454 was added the number of cells of *Lactobacillus delbrueckii* subsp. *bulgaricus* SBT 1511 was controlled to 13% (0.4x10⁸/3.1x10⁸) of that in the control during the 4 hour fermentation and the acidity increase was 66% of that of the control. The antibacterial activity of the yoghurt at the completion of the fermentation against *Bacillus stearothermophilus* was 2 U/ml. Here, the activity to suppress the growth of 10⁶ cells of *Bacillus stearothermophilus* is defined as 1 U/ml of the antibacterial activity.

As illustrated above, according to the present invention raw milk is fermented with the addition of a nisin-producing lactic acid bacteria belonging to genus *Lactococcus lactis* subsp. *lactis* ATCC 11454 together with starter bacteria, thus ensuring the production of nisin in the fermented milk. The nisin can effectively suppress the growth of lactic acid bacteria, especially of lactobaccili. As a result, the proportion of lactobaccili and lactococci in the fermented milk is kept at a suitable ratio so as to suppress acid production during storage and transportation. The fermented milk retains its quality without being deteriorated by the action of acids and the like.

## Claims

1. Fermented milk having a controlled acidity increase during storage and transportation comprising living lactic acid bacteria consisting of *Lactobacillus sp*. and a *Streptococcus thermophilus sp*. and nisin produced by *Lactococcus lactis* subsp. *lactis* ATCC 11454, wherein of the bacteria present after fermentation the amount of *Streptococcus thermophilus* bacteria is 82-94%.

2. Fermented milk according to Claim 1, wherein said living lactic acid bacteria are *Lactobacillus delbrueckii* subsp. *bulgaricus* SBT 1511 (FERM BP-3762), or *Streptococcus salivarius* subsp. *thermophilus*, or both.

3. A process for the manufacture of fermented milk with a controlled acidity increase during storage and transportation comprising: the addition to raw milk of 0.3 to 5% nisin-producing lactic acid bacteria belonging to genus *Lactococcus lactis* subsp. *lactis* ATCC11454 together with a *Lactobacillus sp*. and with a *Streptococcus thermophilus sp*. and fermenting the raw milk, wherein of the bacteria present after fermentation the amount of *Streptococcus thermophilus* bacteria is 82-94%.

4. The process according to Claim 3, wherein said living lactic acid bacteria are *Lactobacillus delbrueckii* subsp. *bulgaricus* SBT 1511 (FERM BP-3762), or *Streptococcus salivarius* subsp. *thermophilus*, or both.

## Patentansprüche

1. Fermentierte Milch mit einem geregelten Säuregradanstieg bei Lagerung und Transport mit lebenden Milchsäurebakterien, bestehend aus *Lactobacillus* sp. und *Streptococcus thermophilus* sp., und Nisin, gebildet durch *Lactococcus lactis* subsp. *lactis* ATCC 11454, wobei von den Bakterien, die nach der Fermentation vorliegen, die Menge an *Streptococcus thermophilus*-Bakterien 82 bis 94 % beträgt.

2. Fermentierte Milch nach Anspruch 1, wobei die lebenden Milchsäurebakterien *Lactobacillus delbrueckii* subsp. *bulgaricus* SBT 1511 (FERM BP-3762) oder *Streptococcus salivarius* subsp. *thermophilus* oder beide sind.

3. Verfahren zur Herstellung von fermentierter Milch mit einem geregelten Säuregradanstieg bei Lagerung und Transport, bei dem man zu Rohmilch 0,3 bis 5 % nisin-bildende Milchsäurebakterien von *Lactococcus lactis* subsp. *lactis* ATCC 11454 zusammen mit *Lactobacillus* sp. und mit *Streptococcus thermophilus* sp. zugibt und die Rohmilch fermentiert, wobei bei den Bakterien, die nach der Fermentation vorliegen, die Menge an *Streptococcus thermophilus*-Bakterien 82 bis 94 % beträgt.

4. Verfahren nach Anspruch 3, bei dem die lebenden Milchsäurebakterien *Lactobacillus delbrueckii* subsp. *bulgaricus* SBT 1511 (FERM BP-3762) oder *Streptococcus salivarius* subsp. *thermophilus* oder beide sind.

## Revendications

1. Lait fermenté qui a une augmentation maîtrisée d'acidité pendant le stockage et le transport, comprenant des bactéries lactiques vivantes constituées d'un *Lactobacillus sp*. et d'un *Streptococcus thermophilus sp*. et de la nisine produite par *Lactococcus lactis* subsp. *lactis* ATCC 11454, où parmi les bactéries présentes après fermentation la quantité de bactéries *Streptococcus thermophilus* représente 82 - 94%.

2. Lait fermenté selon la revendication 1, où lesdites bactéries lactiques vivantes sont *Lactobacillus delbrueckii* subsp. *bulgaricus SBT 1511 (FERM BP-3762)*, ou *Streptococcus salivarius* subsp. *thermophilus*, ou les deux.

3. Procédé de préparation de lait fermenté avec une augmentation maîtrisée d'acidité pendant le stockage et le transport, comprenant : l'addition au lait brut de 0,3 à 5% de bactéries lactiques produisant de la nisine appartenant au genre *Lactococcus lactis* subsp. *lactis* ATCC11454 en présence de *Lactobacillus sp*. et avec *Streptococcus thermophilus sp*. et la mise en fermentation du lait brut, où parmi les bactéries présentes après fermentation la quantité de bactéries *Streptococcus thermophilus* représente 82 - 94%.

4. Procédé selon la revendication 3, où lesdites bactéries lactiques vivantes sont *Lactobacillus delbrueckii* subsp. *bulgaricus* SBT 1511 (FERM BP - 2762) ou *Streptococcus salivarius* subsp. *thermophilus*, ou les deux.
